# EUROPÄISCHE PATENTSCHRIFT

(11) **EP 0 518 169 B1**
(45) Veröffentlichungstag und Bekanntmachung des Hinweises auf die Patenterteilung: **06.09.1995**
(21) Anmeldenummer: 92109234.2
(22) Anmeldetag: 02.06.1992
(51) Int. Cl.: A01D 34/74

(54) **Höheneinstellvorrichtung für ein Mähwerksgehäuse**
Height adjustment assembly for a mower housing
Mécanisme de réglage de la hauteur d'un carter de coupe

(30) Priorität: 14.06.1991 US 715173
(43) Veröffentlichungstag der Anmeldung: 16.12.1992
(73) Patentinhaber: DEERE & COMPANY, Moline, Illinois 61265 (US)
(72) Erfinder: Patterson, Jon Michael, Wauwatosa, Wisconsin 53226 (US); Teal, Richard Donald, Horicon, Wisconsin 53032 (US); Wasson, Steven Charles, Midland, Michigan 48640 (US); Weitz, James Heinrich, Ridgewood, New Jersey 07450 (US)
(74) Vertreter: Feldmann, Bernhard

(56) Entgegenhaltungen:
- EP-A- 0 144 214
- EP-A- 0 217 772
- FR-A- 2 374 835
- US-A- 3 706 188
- US-A- 4 869 057

## Beschreibung

Die Erfindung bezieht sich auf eine Höheneinstellvorrichtung für ein Mähwerksgehäuse, das von einem einen Rahmen aufweisenden Fahrzeug getragen wird, mit einem Hebel, der an seinem einen Ende von einer Bedienungsperson erfaßbar und der mit seinem anderen Ende am Fahrzeug um eine horizontale Achse schwenkbar gelagert ist, und mit mindestens einer Hubstange, die einenends mit dem Hebel zwischen dessen Enden schwenkbar verbunden ist und die bei Verstellung des Hebels um seine horizontale Achse das Mähwerksgehäuse vertikal verstellt.

Bei dieser Höheneinstellvorrichtung (EP-A-0 217 772) ist ein frontseitig an ein Fahrzeug angeschlossenes Mähwerksgehäuse auf einer stillstehenden horizontalen Achse gelagert, die einen dreiarmigen Mitnehmer drehbar aufnimmt, an dessen einem Arm das eine Ende der Hubstange angeschlossen ist. Bei einem Verschwenken des Hebels von Hand wird die Hubstange den Mitnehmer verschwenken und damit auch das Mähwerksgehäuse, dessen Aufhängung seitliche Kippbewegungen gegenüber dem vorderen Fahrzeugteil nicht zuläßt. Bei einem Auftreffen auf Hindernisse muß das Mähwerksgehäuse außerdem von Hand über den entsprechenden Hebel angehoben werden, da ein selbsttätiges Ausweichen in der Höhe nicht vorgesehen ist. Zum Ausheben des Mähwerkes muß die Bedienungsperson eine erhebliche Muskelkraft aufwenden. Derartige Höheneinstellvorrichtungen entsprechen nicht der Forderung der Praxis. Sie sind in ihrem Aufbau sehr aufwendig und benötigen eine große Zahl von Einzelteilen.

Die mit der Erfindung zu lösende Aufgabe wird in einer vereinfachten Höheneinstellvorrichtung mit wenigen Einzelteilen gesehen, die eine allseits bewegliche Aufhängung des Mähwerksgehäuses grundsätzlich möglich macht. Hierzu ist vorgesehen, daß die Hubstange anderenends an das Mähwerksgehäuse schwenkbar angeschlossen ist und daß der Hebel zwischen seinen beiden Enden mit einer Auflagefläche versehen ist, die ein Gelenkmittel beweglich aufnimmt, das mit der Hubstange gekuppelt und derart ausgebildet ist, das die Hubstange nach allen Seiten schwingen kann.

Nach einem weiteren Vorschlag der Erfindung ist vorgesehen, daß die Auflagefläche als Kugelpfanne und das Gelenkmittel als Kugelteil ausgebildet sind, der in der Kugelpfanne beweglich aufgenommen ist.

Eine leichte, gewichtsparende und einfache Ausbildung wird ferner erreicht, wenn der Hebel aus Kunststoff hergestellt ist.

Der Hebel kann außerdem leicht gelagert werden, wenn nach einem weiteren Vorschlag vorgesehen wird, daß der Hebel an seinem zweiten Ende mit wenigstens einem Lagerstift versehen ist, der in eine in dem Grundrahmen vorgesehene Öffnung einsetzbar ist. Ist dann der Grundrahmen auch aus Kunststoff hergestellt, ist die Lagerstelle des Hebels wartungsfrei.

Nach einer weiteren erfinderrischen Maßnahme kann der Hebel sehr stabil ausgebildet und mit beiden Händen leicht erfaßbar sein, wenn der Hebel als U-förmiger Bügelteil ausgebildet ist, dessen Steg mit einem Griffteil versehen ist und dessen Schenkel an ihren dem Griffteil abgelegenen Enden mit je einem Lagerstift versehen sind, die die horizontale Achse bilden, um die der Hebel vertikal verschwenkbar ist, wobei je eine Kugelpfanne in jeweils einem Schenkel vorgesehen ist.

Zweckmäßig kann jeder Kugelteil eine Öffnung zur Aufnahme der Hubstange aufweisen, wobei an jedem Schenkel des Bügelteils eine Hubstange angreift, die an ihren oberen Enden zur Aufnahme je einer Mutter mit Gewinde versehen sind, wobei die Muttern von oben gegen die Kugelteile anliegen. Dies ermöglicht eine einfache Befestigung. Im angebauten Zustand kann das Mähwerksgehäuse Ausweichbewegungen in der Höhe ausführen, da nach einem weiteren Vorschlag der Erfindung die Hubstangen bei aufgeschraubten Muttern nach oben verschiebbar in den Kugelteilen und den Kugelpfannen aufgenommen sind. Eine Sicherung der Hubstangen unterhalb der Kugelpfannen entfällt damit.

Über die Muttern läßt sich das Mähwerksgehäuse leicht justieren, da die Muttern in einem sich unterhalb eines Fahrersitzes befindlichen Gehäuseabschnitt vorgesehen und leicht zugänglich sind.

Eine Parallelverstellung kann dann erreicht werden, wenn das Mähwerksgehäuse über ein vier Streben aufweisendes Gestänge mit dem Fahrzeug verbindbar ist.

In der Zeichnung ist ein nachfolgend näher erläutertes Ausführungsbeispiel der Erfindung dargestellt. Es zeigt:
- Fig. 1: ein Fahrzeug für die Grundstückspflege,

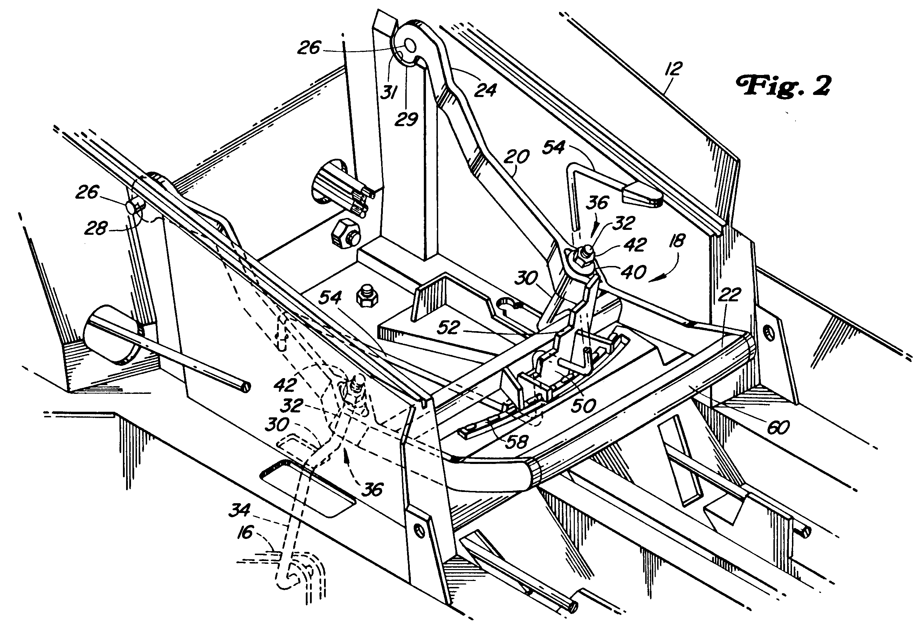

- Fig. 2: eine in einem Gehäuseabschnitt angeordnete Höheneinstellvorrichtung in perspektivischer Darstellung und
- Fig. 3: die Höheneinstellvorrichtung nach Fig. 2 in Seitenansicht und im Schnitt sowie in auseinandergezogener Darstellung.

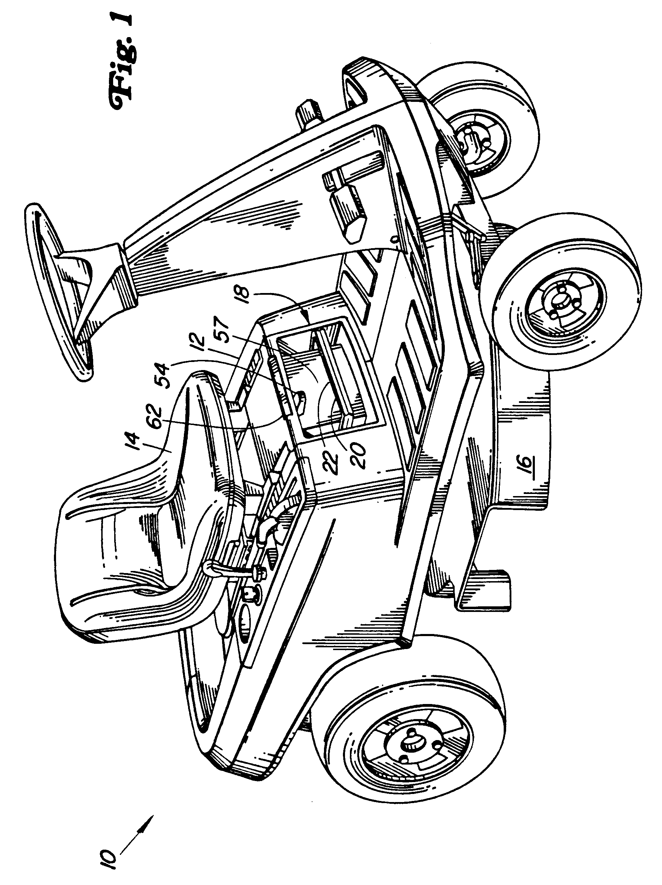

In Fig. 1 der Zeichnung ist ein angetriebenes Fahrzeug 10 für den Einsatz in der Rasen- und Grundstückspflege dargestellt. Es weist einen Grundrahmen 12, einen Fahrersitz 14 und ein Mähwerksgehäuse 16 mit einem nicht dargestellten Mähwerk für den Rasenschnitt auf.

Über eine Höheneinstellvorrichtung 18 kann die Schnitthöhe des Mähwerks eingestellt werden. Die wesentlichen Teile dieser Höheneinstellvorrichtung sind in einem Gehäuseabschnitt angeordnet, der zur Aufnahme des Fahrersitzes 14 dient. So ist unterhalb des Sitzes 14 ein U-förmig ausgestalteter und aus Kunststoff bestehender Bügelteil 20 angeordnet, der ein erstes als Griffteil ausgebildetes Ende 22 aufweist, das den Steg des Bügels bildet und von einer sich auf dem Fahrersitz befindlichen Bedienungsperson ergriffen und hochgeschwenkt werden kann. Für die schwenkbare Lagerung sind die rückwärtigen Enden 24 oder die rückwärtigen Enden der beiden Schenkel des Bügelteils mit integrierten und nach außen weisenden Lagerstiften 26 versehen, die von in dem Grundrahmen 12 vorgesehenen Öffnungen 28 aufgenommen werden können. Die rückwärtigen Enden 24 des Bügelteils 20 sind als abgerundete Lageraugen 29 ausgebildet, die von entsprechend abgerundeten Auflagern 31, die in den Grundrahmen 12 eingeformt sind, drehbar aufgenommen werden können. Die abgerundeten Lageraugen 29 übertragen einen Teil des Gewichtes des Bügelteils 20 direkt auf den Grundrahmen 12. Zwei mit gegenseitigem Seitenabstand angeordnete Hubstangen 30 sind mit ihren oberen Enden 32 schwenkbar mit den beiden Schenkeln des Bügelteils 20 und mit ihren unteren Enden 34 schwenkbar mit dem Mähwerksgehäuse 16 verbunden. Die Hubstangen 30 sind an den Bügelteil bzw. dessen Schenkel über eine Kugelzapfenlagerung 36 angeschlossen. Diese Lagerung besteht aus in die Schenkel des Bügelteils 20 integrierten Kugelpfannen 38, die entsprechend gerundet ausgebildete Kugelteile 40 aufnehmen. Die Hubstreben sind dabei durch die Kugelpfannen und Kugelteile geführt und sind damit in dem Bügelteil 20 allseits beweglich aufgenommen. Sie werden über Muttern 42 gesichert, die von oben auf die oberen Enden 32 der Hubstangen 30, die hierzu mit einem Gewinde 44 versehen sind, aufschraubbar sind. Wird der Bügelteil 20 nun von der Bedienungsperson hochgeschwenkt, so werden die Hubstangen 30 zusammen mit dem Mähwerksgehäuse 16 dann mithochgeschwenkt. Aus Festigkeitsgründen können die beiden Schenkel des Bügelteils 20 noch im Bereich ihrer Zapfenlagerungen 36 durch eine Querstrebe miteinander verbunden sein.

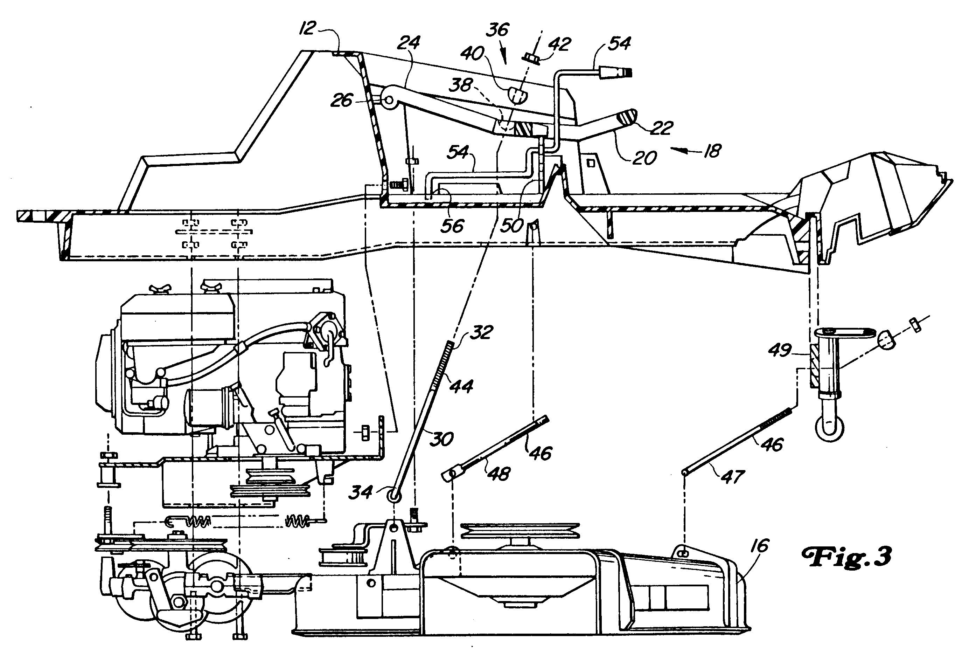

Das Mähwerksgehäuse 16 ist, wie aus Fig. 3 zu erkennen ist, über ein Parallelgestänge 46 an dem Grundrahmen 12 aufgehängt, so daß das Mähwerksgehäuse bei seiner Höhenverstellung parallel verstellt wird. Zu diesem Gestänge 46 gehört ein vorderes und ein rückwärtiges mit dem Mähwerksgehäuse schwenkbar verbundenes Paar Streben 47 und 48, wobei das rückwärtige Paar an den Grundrahmen und das vordere Paar Streben an eine schwenkbare Vorderachse 49 angelenkt ist. Das Mähwerksgehäuse 16 kann auf diese Weise die Kippbewegungen der Vorderachse mitmachen, wenn das Fahrzeug 10 auf unebenem Boden eingesetzt wird.

Zu der Höheneinstellvorrichtung 18 gehört ferner ein Tragteil 50, der von dem Grundrahmen 12 getragen wird und von der Bedienungsperson auf dem Grundrahmen 12 seitlich verschoben werden kann. Der Tragteil 50 weist mehrere seitlich nebeneinander angeordnete Stufen 52 mit ansteigender Höhe auf, wobei der Bügelteil wahlweise auf einer der Stufen 52 zur Auflage kommen kann. Durch seitliches Verschieben des Tragteils 50 und Auflegen des Bügelteils 20 auf eine andere Stufe 52 wird die Höheneinstellung des Mähwerksgehäuses verändert. Mit dem Tragteil ist ein Schwenkhebel 54 fest verbunden, der an seinem rückwärtigen Ende in eine vertikale Öffnung 56 eingesetzt ist, die in dem Grundrahmen 12 vorgesehen ist. Bei der seitlichen Verstellung des Tragteils 50 wird er damit durch den Schwenkhebel 54 auf einem horizontalen Bogen geführt. Der Schwenkhebel 54 ist durch den Tragteil noch nach vorne geführt und nach oben geführt und wieder nach vorne geführt, wo er sich durch eine vordere Abdeckung 57 des Gehäuseabschnittes bis zwischen die Beine der Bedienungsperson erstreckt. Auf dem Grundrahmen 12 sind außerdem Feststellkerben 58 vorgesehen, in die der Tragteil 50 in seiner jeweiligen Stellung vermittels an ihm vorgesehener Fingerausleger einrasten kann. Der Tragteil ist dann gegen ein seitliches Verstellen festgelegt, wenn der Bügelteil 20 auf einer der Stufen 52 ruht.

Um die Schnitthöhe des Mähwerksgehäuses 16 einstellen zu können, ergreift die sich auf dem Fahrersitz 14 befindliche Bedienungsperson den Bügelteil 20 mit beiden Händen und hebt ihn an. Dabei schwenken die Schenkel des Bügelteils 20 mit ihren Lageraugen 29 in Auflagern 31 am Grundrahmen 12. Die Bedienungsperson braucht den Bügelteil und damit auch das Mähwerk nur soweit anzuheben, daß der Tragteil frei kommt, der dann in eine neue Stellung verstellt werden kann, wenn die Bedienungsperson mit ihren Daumen den Schwenkhebel 54 entsprechend verstellt. Auf der Abdeckung 57 kann noch eine Schnitthöhenanzeige 62 vorgesehen sein, die den einzelnen Stufen 52 zugeordnet ist, so daß die Bedienungsperson leicht erkennen kann, wo sie den Schwenkhebel 54 hinzufahren hat, um die gewünschte Schnitthöhe zu erhalten. Sobald der Schwenkhebel 54 die von der Bedienungsperson gewünschte Schnitthöhenanzeige erreicht hat, kann der Bügelteil wieder abgelassen werden, wo er auf der nunmehr gewählten Stufe 52 zur Auflage kommt.

Beim Anheben und Absenken des Bügelteils 20 verschieben sich die Kugelteile 40 in den Kugelpfannen 38, da die Hubstangen 30 bei einer Höhenänderung ihre Lage gegenüber dem Bügelteil 20 ändern. Die Kugelteile 40 verteilen dabei das Gewicht des Mähers auf eine relativ große Fläche der Kugelpfannen 38, wobei es keine Rolle spielt, welchen Winkel die Hubstangen zu den Schenkeln des Bügelteils 20 jeweils einnehmen. Die Kugelzapfenlagerungen 36 ermöglichen damit eine wirksame Gewichtsverteilung auch dann, wenn eine seitliche Verschiebung des Mähwerksgehäuses 16, beispielsweise bei Arbeiten an Hängen, auftreten sollte. Auf Grund dieser vorteilhaften Gewichtsverteilung können der Bügelteil 20 und die Kugelteile aus relativ weichem Werkstoff hergestellt werden. Die Werkstoffkosten der Höheneinstellvorrichtung werden dadurch reduziert. Während der Bügelteil mit den integrierten Kugelpfannen aus Kunststoff besteht, können die Kugelteile 40 aus Sintermetall hergestellt werden. Natürlich könnte auch der Bügelteil im Rahmen der Erfindung aus einem metallischen Werkstoff hergestellt werden. Bevorzugt ist jedoch eine Ausführung in Kunststoff, bei der die Kugelpfannen beim Gießen direkt miteingeformt werden. Auch diese Maßnahme verbilligt die Gesamtausführung. Eine Schmierung eines solchen Zapfenlagers ist ebenfalls nicht erforderlich. Da auch die Lagerstifte 26, die Lageraugen 29 und ein der besseren Griffigkeit dienender Teil 60 auf dem Griffteil 22 einstückig mit dem Bügelteil 20 ausgebildet sind, ist die Zahl der Einzelteile gering, wodurch wiederum der Zusammenbau erleichtert ist und die Kosten für den Zusammenbau ebenfalls reduziert sind.

Nach einer sehr langen Einsatzzeit kann es vorkommen, daß das Mähwerksgehäuse 16 nach der einen oder anderen Seite verkippt ist. Das Verkippen kann seinen Grund darin haben, daß eine der Streben im Einsatz verbogen wurde, beispielsweise bei einem Einsatz auf äußerst unebenem Grund. Ist das Mähwerkgehäuse 16 verkippt oder nicht mehr horizontal ausgerichtet, dann schneidet das Mähwerk auch nicht mehr in einer geraden horizontalen Ebene und die Schnitthöhe ist unterschiedlich. Bei dem bevorzugten Ausführungsbeispiel kann aber das Mähwerksgehäuse leicht wieder richtig eingestellt werden, damit ein gleichmäßiger Schnitt erfolgen kann. Hierzu braucht die Bedienungsperson nämlich lediglich eine der auf die Hubstangen 30 aufgeschraubten Muttern 42 zu verstellen. Eine Neueinstellung der Muttern 42 bewirkt, daß die zugehörige Hubstange entweder höher oder tiefer in dem entsprechenden Schenkel des Bügelteils zu liegen kommt, d. h. die effektive Länge der entsprechenden Hubstange wird verändert und damit auch die Höheneinstellung des Mähwerksgehäuses. Die entsprechende Seite des Mähwerksgehäuses wird entweder angehoben oder abgesenkt, so daß das Gehäuse wieder eine Stellung einnehmen kann, in der ein gleichmäßiger Schnitt erfolgt.

Das Mähwerksgehäuse kann an jeder seiner beiden Seiten eingestellt werden, so daß die Höheneinstellung auch genau der Schnitthöhenanzeige 62 entspricht. Ist zum Beispiel die rechte Seite des Mähwerksgehäuses 16 nach einer langen Einsatzzeit nach oben verkippt, dann braucht nur die Mutter 42 an der rechten Seite so verstellt zu werden, daß die wirksame Länge der rechten Hubstange 30 vergrößert wird, um das Mähwerk wieder richtig einstellen zu können. Ein Einstellen in die richtige Position ist grundsätzlich auch mit einer einzigen einstellbaren Hubstange möglich. Doch würde dann die neue Einstellung nicht mehr der Schnitthöhenanzeige entsprechen. Beim bevorzugten Ausführungsbeispiel ist dies nicht der Fall.

Die Muttern 42 sind auch leicht für eine Neueinstellung zugänglich. Es braucht nur die Abdeckung 57 entfernt zu werden und der Zugang zu den sich unter dem Sitz befindlichen Muttern ist frei.

Das Parallelgestänge 46 bewirkt, daß das Mähwerksgehäuse immer parallel verstellt wird auch dann, wenn der Bügelteil 20 hochgeschwenkt wird. Die vier Streben 47 und 48 verschweken dabei um ihre Anlenkstellen. Die Schnittqualität bleibt in jeder Höheneinstellung ausgezeichnet.

Es wurde bereits ausgeführt, daß die Streben 47 an der Vorderachse 49 angreifen, wodurch der vordere Bereich des Mähwerksgehäuses die Bewegungen der Vorderachse bei Fahrten auf unebenem Grund mitmachen kann. In solchen Fällen wird sich lediglich eine der Hubstangen in ihrer Kugelzapfenlagerung nach oben verstellen und in ihre Ausgangslage zurückkehren, wenn das Fahrzeug wieder auf ebenem Boden fährt. Das Mähwerksgehäuse wird dann ebenfalls wieder seine vorher eingestellte Lage einnehmen.

## Patentansprüche

1. Höheneinstellvorrichtung für ein Mähwerksgehäuse (16), das von einem einen Rahmen (12) aufweisenden Fahrzeug (10) getragen wird, mit einem Hebel (20), der an seinem einen Ende von einer Bedienungsperson erfaßbar und der mit seinem anderen Ende am Fahrzeug (10) um eine horizontale Achse schwenkbar gelagert ist, und mit mindestens einer Hubstange (30), die einenends mit dem Hebel (20) zwischen dessen Enden schwenkbar verbunden ist und die bei Verstellung des Hebels (20) um seine horizontale Achse das Mähwerksgehäuse (16) vertikal verstellt, dadurch gekennzeichnet, daß die Hubstange (30) anderenends an das Mähwerksgehäuse (16) schwenkbar angeschlossen ist und daß der Hebel (20) zwischen seinen beiden Enden mit einer Auflagefläche (38) versehen ist, die ein Gelenkmittel beweglich aufnimmt, das mit der Hubstange (30) gekuppelt und derart ausgebildet ist, das die Hubstange (30) nach allen Seiten schwingen kann.

2. Höheneinstellvorrichtung nach Anspruch 1, dadurch gekennzeichnet, daß die Auflagefläche als Kugelpfanne (38) und das Gelenkmittel als Kugelteil (40) ausgebildet sind, der in der Kugelpfanne (38) beweglich aufgenommen ist.

3. Höheneinstellvorrichtung nach Anspruch 1, dadurch gekennzeichnet, daß der Hebel (20) aus Kunststoff hergestellt ist.

4. Höheneinstellvorrichtung nach Anspruch 1, dadurch gekennzeichnet, daß der Hebel (20) an seinem zweiten Ende mit wenigstens einem Lagerstift (26) versehen ist, der in einer in dem Grundrahmen (12) vorgesehenen Öffnung einsetzbar ist.

5. Höheneinstellvorrichtung nach einem oder mehreren der vorherigen Ansprüche, dadurch gekennzeichnet, daß der Hebel (20) als U-förmiger Bügelteil ausgebildet ist, dessen Steg mit einem Griffteil (60) versehen ist und dessen Schenkel an ihren dem Griffteil abgelegenen Enden mit je einem Lagerstift (26) versehen sind, die die horizontale Achse bilden, um die der Hebel (20) vertikal verschwenkbar ist, wobei je eine Kugelpfanne (38) in jeweils einem Schenkel vorgesehen ist.

6. Höheneinstellvorrichtung nach Anspruch 2, dadurch gekenndaß jeder Kugelteil (40) eine Öffnung zur Aufnahme der Hubstange (30) aufweist.

7. Höheneinstellvorrichtung nach Anspruch 6, dadurch gekennzeichnet, daß an jedem Schenkel des Bügelteils (20) eine Hubstange (30) angreift, die an ihren oberen Enden zur Aufnahme je einer Mutter (42) mit Gewinde versehen sind, wobei die Muttern (42) von oben gegen die Kugelteile (40) anliegen.

8. Höheneinstellvorrichtung nach Anspruch 7, dadurch gekennzeichnet, daß die Hubstangen (30) bei aufgeschraubten Muttern (42) nach oben verschiebbar in den Kugelteilen (40) und den Kugelpfannen (38) aufgenommen sind.

9. Höheneinstellvorrichtung nach Anspruch 7, dadurch gekennzeichnet, daß die Muttern (42) in einem sich unterhalb eines Fahrersitzes (14) befindlichen Gehäuseabschnitt vorgesehen und leicht zugänglich sind.

10. Höheneinstellvorrichtung nach einem oder mehreren der vorherigen Ansprüche, dadurch gekennzeichnet, daß das Mähwerksgehäuse (16) über ein vier Streben (47, 48) aufweisendes Gestänge (46) mit dem Fahrzeug (10) verbindbar ist.

## Claims

1. Device for vertical adjustment of a mower deck (16) which is carried by a vehicle ((10) having a frame (12), and with a lever (20), which may be grasped by the operating person at one of its ends, and which is mounted on the vehicle (10) to pivot at the other end about a horizontal axis, and with at least one lifting rod (30) which is pivotally connected at one end with the lever (20) between its ends, and which, upon displacement of the lever (20) about its horizontal axis, vertically adjusts the mower deck (16),
characterised in that the lifting rod (30) is pivotally connected at the other end to the mower deck (16), and in that the lever (20) is provided between its two ends with a seat surface (38) which movably accommodates an articulation means, which is coupled to the lifting rod (30) and is so designed that the lifting rod (30) can swing to all sides.

2. Vertical adjusting device according to Claim 1, characterised in that the seat surface is formed as a spherical socket (38) and the articulation means as a ball member (40) which is movably accommodated in the spherical socket (38).

3. Vertical adjusting device according to Claim 1, characterised in that the lever (20) is made of plastics.

4. Vertical adjusting device according to Claim 1, characterised in that the lever (20) is provided at its second end with at least one bearing pin (26) which may be inserted in an opening provided in the basic frame (12).

5. Vertical adjusting device according to one or more of the preceding Claims, characterised in that the lever (20) is in the form of a U-shaped bow member, whose web is provided with a handle portion (60), and whose legs are respectively provided at their end remote from the handle portion with a bearing pin (26), which form the horizontal axis about which the lever (20) is vertically pivotable, one spherical socket (38) being provided in each respective leg.

6. Vertical adjusting device according to Claim 2, characterised in that each ball member (40) has an opening for receiving the lifting rod (30).

7. Vertical adjusting device according to Claim 6, characterised in that there engages on each leg of the bow portion (20), a lifting rod (30), these being provided at their upper ends with threads for receiving respective nuts (42), the nuts (42) abutting on the ball members (40) from above.

8. Vertical adjusting device according to Claim 7, characterised in that, when the nuts (42) are screwed on, the lifting rods (30) are accommodated in an upwardly displaceable manner in the ball members (40) and in the spherical sockets (38).

9. Vertical adjusting device according to Claim 7, characterised in that the nuts (42) are provided in, and are easily accessible in, a casing portion located beneath a driver's seat (14).

10. Vertical adjusting device according to one or more of the preceding Claims, characterised in that the mower deck (16) is connectable to the vehicle (10) via a linkage (46) having four bars (47, 48).

## Revendications

1. Dispositif de réglage en hauteur pour un carter (16) d'une unité de coupe, qui est porté par un véhicule (10) possédant un cadre (12), comportant un levier (20), qui peut être saisi, au niveau de l'une de ses extrémités, par un opérateur et qui est monté, par son autre extrémité sur le véhicule (10), de manière à pouvoir pivoter autour d'un axe horizontal, et comportant au moins une barre de soulèvement (30), qui est reliée par l'une de ses extrémités, de manière à pouvoir pivoter, au levier (20) entre les extrémités de ce dernier et qui, lors du déplacement du levier (20) autour de son axe horizontal, déplace verticalement le carter (16) de l'unité de coupe, caractérisé en ce que la barre de soulèvement (30) est raccordée par son autre extrémité, de manière à pouvoir pivoter, au carter (16) de l'unité de coupe et que le levier (20) est équipé, entre ses deux extrémités, d'une surface d'appui (38), qui reçoit, de manière qu'il soit mobile, un moyen d'articulation qui est accouplé à la barre de soulèvement (30) et est agencé de telle sorte que la barre de soulèvement (30) peut basculer de tous côtés.

2. Dispositif de réglage en hauteur selon la revendication 1, caractérisé en ce que la surface d'appui est réalisée sous la forme d'un coussinet sphérique (38) et que le moyen d'articulation est agencé sous la forme d'un élément de sphère (40), qui est logé de manière à être mobile dans le coussinet sphérique (38).

3. Dispositif de réglage en hauteur selon la revendication 1, caractérisé en ce que le levier (20) est réalisé en matière plastique.

4. Dispositif de réglage en hauteur selon la revendication 1, caractérisé en ce que le levier (20) comporte, au niveau de sa seconde extrémité, au moins un tourillon (26), qui peut être inséré dans une ouverture prévue dans le cadre de base (12).

5. Dispositif de réglage en hauteur selon une ou plusieurs des revendications précédentes, caractérisé en ce que le levier (20) est agencé sous la forme d'un étrier en forme de U, dont la base comporte un élément de préhension (16) et dont les branches comportent, au niveau de leurs extrémités tournées à l'opposé de la partie de préhension, des tourillons respectifs (26), qui forment l'axe horizontal autour duquel le levier (20) peut basculer verticalement, un coussinet sphérique (38) étant prévu respectivement dans chaque branche.

6. Dispositif de réglage en hauteur selon la revendication 2, caractérisé en ce que chaque partie de sphère (40) possède une ouverture servant à loger la barre de soulèvement (30).

7. Dispositif de réglage en hauteur selon la revendication 6, caractérisé par le fait que chaque branche de l'étrier (20) est attaquée par une barre de soulèvement (30), qui comporte, au niveau de ses extrémités supérieures, un filetage pour recevoir un écrou respectif (42), les écrous (42) s'appliquant à partir du haut contre les parties de sphère (40).

8. Dispositif de réglage en hauteur selon la revendication 7, caractérisé en ce que lorsque des écrous (42) sont vissés, les barres de soulèvement (30) sont reçues, de manière à être déplaçables vers le haut, dans les parties de sphère (40) et dans les coussinets sphériques (38).

9. Dispositif de réglage en hauteur selon la revendication 7, caractérisé en ce que les écrous (42) sont prévus dans une partie du boîtier, qui est située audessous d'un siège (14) du véhicule et sont aisément accessibles.

10. Dispositif de réglage en hauteur selon une ou plusieurs des revendications précédentes, caractérisé en ce que le carter (16) de l'unité de coupe peut être relié au véhicule (10) par l'intermédiaire d'une tringlerie (46) qui possède quatre entretoises (47,48).
